# EUROPEAN PATENT SPECIFICATION

(11) **EP 0 553 325 B1**
(45) Date of publication and mention of the grant of the patent: **27.09.1995**
(21) Application number: 92917060.3
(22) Date of filing: 05.08.1992
(51) Int. Cl.: B06B 1/06, G10K 11/00, H04R 1/22, G01H 11/08

(54) **PROBE FOR MEASURING ACOUSTIC FIELDS OF HIGH INTENSITY**
FÜHLER ZUM MESSEN VON HOCHINTENSITÄTAKUSTISCHEN FELDERN
SONDE DE MESURE DE CHAMPS ACOUSTIQUES DE HAUTE INTENSITE

(30) Priority: 06.08.1991 ES 9101831
(43) Date of publication of application: 04.08.1993
(73) Proprietor: CONSEJO SUPERIOR DE INVESTIGACIONES CIENTIFICAS, E-28006 Madrid (ES)
(72) Inventor: GAETE GARRETON, Luis, Inst. de Electr. de Communic, Serrano, 144, E-28006 Madrid (ES); VARGAS HERNANDEZ, Yolanda, Inst. de Electronica de, Cientificas Serrano 144, E-28006 Madrid (ES); MONTOYA VITINI, Fausto, Inst. de Electronica de, Cientificas Serrano 144, E-28006 Madrid (ES)
(74) Representative: Ungria Lopez, Javier
(86) International application number: ES9200061
(87) International publication number: WO9302808

(56) References cited:
- PATENT ABSTRACTS OF JAPAN, vol. 013, no. 518, (E-848) 20 November 1989, & JP,A, 1209896
- PATENT ABSTRACTS OF JAPAN, vol. 15, no. 46 (E-1029), 4 February 1991, & JP-A-2278997
- PATENT ABSTRACTS OF JAPAN, volumen 15, no. 304 (E-1096), 5 August 1991, & JP-A-3108997
- SOVIET PHYSICS ACOUSTICS, volumen 26, no. 3, May-June 1980, New-York, US; I.V. Vovk: "Sound radiation from a cylinder partially encased in an open annular layer", pages 198-201 .
- DATABASE WPIL, section EI, week 8609, Derwent Publications Ltd., Class V06,AN-86-056185, LONDON, GB; & DE-A-3425176

## Description

The invention concerns a probe for the measurement of high intensity acoustic fields as claimed. The activities and operations that may be implemented with the help of this probe are:
1.- Determination of the propagation constants of materials deriving from the new shapes.
2.- Determination of the acoustic fields deriving from projectors applied in oceanographic research.
3.- Assessment and optimization of sonar reactors.
4.- Chamber measurement and control of acoustic processes in gaseous media.
5.- Gauging of hydroacoustic transducers.
6.- In the field of instrumentation, the probe, duly gauged, may be employed as a master detector.

### FIELDS OF APPLICATION

- Mining
- Oceanography
- Sonar reactors
- Acoustic processes in gases
- Hydroacoustics
- Instrumentation

The study of high intensity acoustic fields in fluids requires the use of sensors capable of resisting high acoustic pressure. In fact, in experimental non-linear acoustics, pressures are currently detected which may reach levels up to 160 dB per 2 x 10-5 Pa for progressive waves and up to 170 dB per 2 x 10 -5 Pa for stationary waves, see references (1.) and (2.). These high acoustic pressures can break conventional condenser detectors in a few minutes, which otherwise present excellent frequency sensitivity and response properties (3.).

For the study and measurement of highly distorted fields and due to the non-linearity of the medium, the approach of the incoming signal by means of a tube or probe fitted to a condenser microphone results impractical, as it may blur the response pattern of the system (4.).

Thus the only solution is to be sought in a detection system which is solid and safe enough so as not to break as a consequence of exposure to high intensity fields. In addition, the characteristics of sensitivity and response to frequency of the detector have to be stable and adequate for operation in air and water.

In the last decades major research efforts have been made in order to develop detectors with the above-mentioned properties. One of the greatest achievements in this field was the acoustic probe developed by Schilling. The Schilling device consisted of a piezoelectric cylinder firmly coupled to a metal rod by means of a hard adhesive. Then a couple of rubber rings were fitted to the support tube of the piezoelectric ceramics with the function of decoupling the piezoelectric ceramics from the metal rod. The whole device was coated with a protective resin. Unfortunately the response curve of the Schilling probe shows prominent oscillations. This latter fact allows for the conclusion that, in spite of having succeeded in the design of a detector which satisfied the requirements of both solidity and sensitivity, no significant decoupling was achieved between the detected signal and those that had originated, not from the phenomenon under study, but from the detection system itself.

Several years later Lewin reported on the construction of a new piezoelectric probe set (6.), into which a considerable number of improvements had been incorporated, regarding the response capacity to frequencies as well as the feature of mechanical couplings, which were sufficiently weak so as not to let the support tube vibrations have too great an impact on the measuring accuracy. Regretfully, sensitivity in air of the Lewin probe is extremely low (-253 dB per -lV/nPa), which reduces its interest almost exclusively to the study of acoustic fields in high density fluids (liquids).

Recently, membrane type probes have been developed in the NPL, in London (7), based on the idea of polarizing a small sector of a thin sheet of piezoelectric material of recent manufacture (PVDF), placed in a frame and equipped with two conductor gold tracks sputtered onto the membrane. The sensitive element of this sector is practically punctual. The NPL-designed detector has, however, but a limited field of application. The constraints are of two kinds: on the one hand and due to the fact that the probe is not self-supporting, it requires the use of a support frame which disturbs the measurement zone.

On the other hand the membrane, in spite of being transparent to the ultrasonic waves in water, has a specific impedance (Pc) which is considerably greater than air. Thus, when used for operation in gaseous media, the NPL probe proves to possess a low sensitivity and to be totally invasive.

Patent Abstracts of Japan, vol. 15, No. 304 (E-1096) discloses a probe for the measurement of acoustic fields, comprising a vibration pick-up mechanism loaded on a gel-like material in a floating state inside an inner case of a damping material. The inner case is fixed in a metal housing also containing an amplifier.

The present invention relates to a probe for the measurement of high intensity acoustic fields, as defined in Claim 1. Claims 2 to 10 set out particular embodiments of the invention.
Fig. 1 shows a schematic diagram of the probe in accordance with the present invention.
Fig. 2 shows a detail of the active system of the probe.
Fig. 3 shows a schematic representation of an embodiment of an electronic signal preamplifier.
Fig. 4 shows a linear electrical response curve of the electro-acoustic transducer of the probe.
Fig. 5 shows a logarithmic electrical response curve of the electro-acoustic transducer element of the probe.

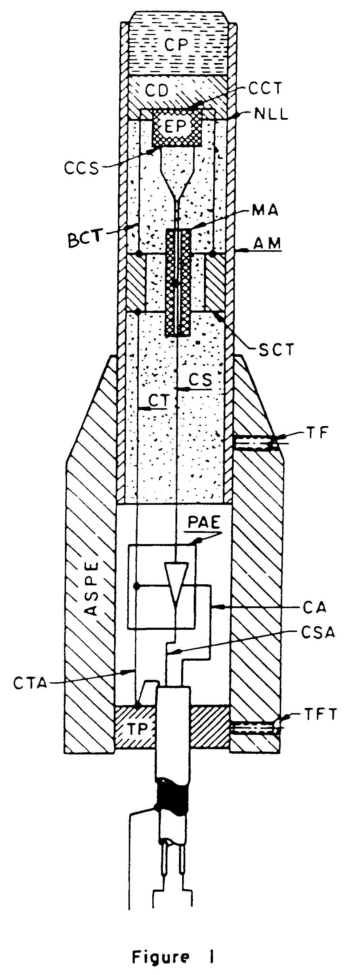

The invention refers to a probe for the measurement of high intensity acoustic fields, as shown in Fig. 1.

For the probe to satisfy the requirement of good sensitivity, it was manufactured with piezoelectric materials of considerable thickness, but thin enough to prevent the resonance of the piezoelectric element in its first thickness mode to fall within the frequency range of the measurements. It is well known that these sensitivity conditions of an ultrasonic transducer are approximately proportional to the thickness of the piezoelectric element (8.) As a special case and in order to operate in a frequency band around the natural frequency of the first thickness mode of the piezoelectric element, operation in resonance has also been taken into account, enhancing the probe's sensitivity by means of addition of the appropriate adaptation layers.

In order to make the probe self-supportive and noninvasive, the piezoelectric element, i.e. the active element, is encapsulated in a metal tube whose diameter is considerably smaller than half the wave length of the highest harmonic to be detected. In addition and in order to prevent the container holding the electronic conditioner of the signal from disturbing the field, the length of the support tube will have to be considerably longer than that of the wave of the basic component to be measured.

Owing to the fact that the elements sensitive towards an acoustic field prove to be fairly noisy, the probe was equipped with an electronic system capable of conditioning the signal, so as to cater to the measurement systems under favourable conditions.

High intensity acoustic fields easily excite the modes pertaining to the support tube. This generates spurious signals. In order to avoid the appearance of these signals, or at least to fade them significantly, the support tube was filled with a material possessing high dampening properties. This effect is produced both by means of creep friction, as well as through other physical processes. A number of dampening substances were determined experimentally, such as silicone rubber, natural rubber, etc. For the purpose of incrementing the dispersive capacity of the dampening substance, it incorporates major amounts of occluded gas. In addition, the experimental rubbers were filled with particles of other materials, such as aluminum, alumina, cork, etc., thus making the dampener dispersive. It should be highlighted that the substances chosen for this purpose generally preserve their elastic and dampening properties.

With the aim of preventing the vibrations excited in the support tube from triggering a spurious signal in the active element, the latter was positioned in a "floating" condition. To this end the greatest lateral dimension of the active element must be considerably smaller than the inner tube dimensions. Thus a layer of the dampening substance is allowed to move along the sides of the active element conferring onto it a highly dampening elastic suspension.

Considering that it is not desirable to introduce attenuations in the signal which generates the acoustic field to be measured, it is convenient not to allow the dampening slurry to surpass a certain filling level (NLL). Thus the front side of the piezoelectric element (EP), or active element, is left uncoated.

The active element of the probe is protected against attack from the medium, such as corrosive fases, impact from particles, blows, etc., by a fine protective layer (CP). Care should be taken that the CP presents the lowest possible attenuation. Therefore methyl methacrylate was used, as well as Araldite (Trade Mark), both carefully degassed. When the tube firmly adheres to the protective layer an undesirable coupling between the piezoelectric element and the metal housing (AM) may be produced. Therefore the surface of the active element was coated with a fine layer of pure and degassed silicone rubber, thus contributing to a relevant decoupling of the active element with moderate losses.

In case operation in a relatively narrow band is required, around the resonance frequency of the sensitive element, two decoupling and protective layers are designed in order to constitute "Impedance adaptation layers" (λ/4). This makes it necessary for these elements to consist of substances suited to satisfy the impedance ratios in the desired operative mode: Continuous wave or pulse-echo mode (9.). Note that there exists the possibility of applying a greater number of impedance adaptation layers to the probe, thus configurating a "multi-layer" transducer.

The earth conductor (CT), a very fine conductor wire so as not to confer any rigidity to the system, is fixed to the front face of the piezoelectric element. The fixing mechanism may vary as required: from a conductive resin layer to a weld implemented with a low melting point materials.

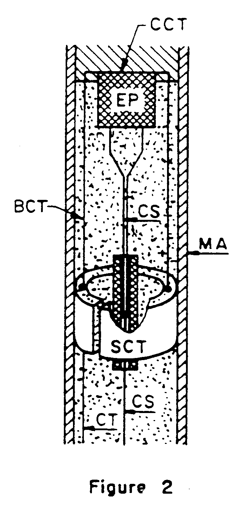

The earth conductor, as can be seen in Fig. 2, is a double wire whose ends are fixed to two diametrically opposed cavities in the earth conductor support (SCT). This support is a cylindrical sleeve with an opening parallel to its symmetry axis. The slot is meant to confer flexibility to the SCT and to ease the set-up operations.

The SCT may be manufactured of conductor or insulating material. If an earth connection is required in the vicinity of the active element, the support material should be preferably metal. In contrast, if it is desirable for the earth connection to be positioned at a single common site and at a different location, the support will have to be made of insulating material. The earth conductor (CT) of the probe is fitted to one of the ends of the SCT.

The metal casing, the support of the detector and the electric screen of the system are placed into an opening at the far end of the casing of the electronic preamplifier system. It is made of metal and is held in place by a screw (TF) to block the AM in the desired position. Thanks to this layout the connections can be implemented occupying minium space, and it allows, in addition, that the signal conductor, input and earthing wires inside the device may be kept as short as possible. These considerable benefits may be achieved, both from the electric and the mechanical point of view.

The set is covered by a metal cap which allows a twin screened conductor wire to enter the system to feed the preamplifier and to transmit the signal to the metering systems. The lid at the back side also has an earthing for the encapsulation system of the detector.

The final part of the description of the device to be patented refers to the features of the electronic system incorporated into the device.

The electronic system is a signal conditioner, as indicated in Fig. 1, consisting of three subsystems: 1).-an electronic preamplifier (PE), 2).- two conductor leads between the preamplifier and the piezoelectric element (EP), and 3).- the conductor lead between the electronic preamplifier and the metering system.

The conductor leads between the piezoelectric element and the electronic preamplifier consists of a "signal conductor" wire and the "earth conductor" return signal wire (CT). Both conductors, as well as the piezoelectric element are electro-magnetically screened through the metal housing (AM) and the "Housing of the Electronic Preamplifier System" (ASPE.)

Both housings are electrically interconnected and, in addition, they are connected to the screened earth conductor (CTA) at a single site, i.e. the output site of the electronic preamplifier. The two housings are connected at a single point to the screened earth conductor, i.e. exactly at the junction with the electronic preamplifier. The screens help to avoid induction of eddy currents and interference voltage, both along the signal and earth conductors, as well as in the cabling and components of the electronic preamplifier.

The coupling leads between the electronic preamplifier and the metering system consist of an "amplified signal conductor" wire (CSA), the feed wire (CA) and return signal wire and earth-screen feed wire (CTA.) These wires form a screened twin cable, in which the first two are protected from parasitic electromagnetic fields by the earth-screen conductor wire which surrounds them, in order to avoid the disturbing effect of interferences on measuring accuracy.

The electronic preamplifier has the task of conditioning the extremely weak signal picked up by the piezoelectric element and then to be transmitted without major losses, by a long cable to the distant measuring system.

The electronic preamplifier is characterised by its features: it possesses a high input impedance so as not to attenuate the signal coming from the piezoelectric element, as well as a high power gain in order to make available, at the output site, a signal level which is considerably higher than that of the noise proper of the metering system. In addition, this device levels out the electromagnetic interferences that may be induced at the interconnections between the preamplifier and the metering system. Last but not least the electronic preamplifier was designed to possess an output impedance equivalent to that of the characteristic impedance of the screened twin cable which connects it to the metering system for the purpose of avoiding reflections and stationary waves in the cable which distort the wave shape of the signal.

The symbols and the reference letters in the drawings have the following significances:
Fig. 1.-
   - CP: : Protective layer
   - CD: : Decoupling layer
   - CCT: : Earth wire connection
   - BCT: : Flanges of the earth connection
   - NLL: : Filling level of the damping substance
   - EP: : Piezoelectric element
   - CCS: : Signal connector connection
   - AM: : Metal housing
   - MA: : Insulating material
   - SCT: : Support of the earth conductor
   - CS: : Signal conductor
   - CT: : Earth conductor
   - TF: : Lock screw
   - PAE: : Electronic preamplifier
   - CSA: : Conductor of the amplified signal
   - ASPE: : Housing of the electronic preamplifier system
   - CA: : Feed wire
   - CTA: : Earth screen conductor
   - TP: : Back lid of the system
   - TFT: : Lock lid screw
Fig. 2.-
   - CCT: : Earth conductor connection
   - EP: : Piezoelectric element
   - BCT: : Earth conductor flanges
   - CS: : Signal conductor
   - MA: : Insulating material
   - SCT: : Support of the earth conductor
   - CT: : Earth conductor
Fig. 3.-
   - T1: : FET transistor operating in the common port mode, forming a cascode mount with T2.
   - T2: : FET transistor high impedance input amplifier, forming a cascode mount with T1.
   - T3: : Bipolar transistor output amplifier, operating in the common collector mode.
   - R1: : T1 port polarization resistance.
   - R2: : T1 charge resistance.
   - R3: : T3 base polarization resistance.
   - R4: : T1 polarization resistance.
   - R5: : T3 base polarization resistance.
   - R6: : T2 port polarization resistance.
   - R7: : T2 source polarization resistance.
   - R8: : T3 emitter polarizatoin resistance.
   - R9: : Charge resistance and T3 output impedance adaptation.
   - C1: : Input voltage filtrate condenser.
   - C2: : Throughput condenser blocking the inter-phase direct current.
   - C3: : T1 port polarization decoupling condenser.
   - C4: : T2 source polarization decoupling condenser.
   - C5: : Throughput condenser blocking the direct current output.
   - L1: : High frequency response peaking coil.
   - Vcc: : Input voltage
   - ENT: : Preamplifier input connections
   - SAL: : Preamplifier output connections.
Fig. 4.-
   The circles on the measurement graphs identify phase determinations and the impedance modulus for a certain frequency value.
   - ∅: : Phase measurement.
   - |Z|: : Electric impedance modulus measurement
Fig. 5.-
   - ∅: : Phase measurement, linear in magnitude and logarithmic in frequency.
   - Z|: : Measurement of the electric impedance modulus, logarithmic along the two axes.

The invention submitted to patent has given rise to the construction of a prototype as shown in detail in Fig. 1 of this specification.

The capsule protecting the preamplifier was made of stainless steel 316. The outer diameter of the capsule (ASPE) is 13.6 mm, its length 120 mm and the inner diameter is 11.5 mm.

The metal housing (AM) of the piezoelectric element (EP) consists likewise of a stainless steel metal tube, outer diameter 2.5 mm, inner diameter 2 mm. The piezoelectric element (EP) is a parallelpiped with a square base of 2 mm. side length and 1 mm. edge. It is made of a highly sensitive material (PZT5 (Trade Mark)) and its axial polarization is oriented parallel to the symmetry axis of the system.

The protective layer consists of a highly fluid polymer (UNECO (Trade Mark) from CIBA) degassed in a vacuum of some 0.136 N/m² (10⁻³ Hg).

The decoupling layer (CD) is made of a silicone rubber "C" i.e. it has an acoustic impedance similar to that of water. The CCT and CCS contacts are a conductor resin, the earth connector flanges are made of enameled copper wire, diameter 0.1 mm.

The CCS wire diameter is 0.2 mm. The material of the MA sleeve is cylinder-shaped plastic. The earth conductor support is made of Teflon (Trade Mark), and the dampening resin is a silicone rubber filled with cork and aluminum particles.

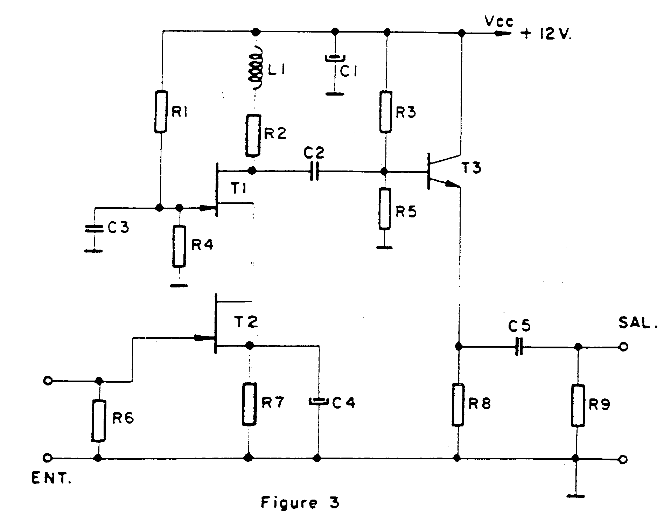

The electronic preamplifier of this prototype was implemented by means of three transistors, as shown in Fig. 3. The first and the second are a FET twin set in cascode configuration with the characteristic of providing a very low input capacity together with a very high input resistance, thus achieving a gain of 20 dB, which is sufficient to avoid the noise problems that might arise. The third transistor forms the output phase.

Its mount is of the emitter type, capable of obtaining an output impedance nearing 50, which is ideal for exciting output cables of this impedance.

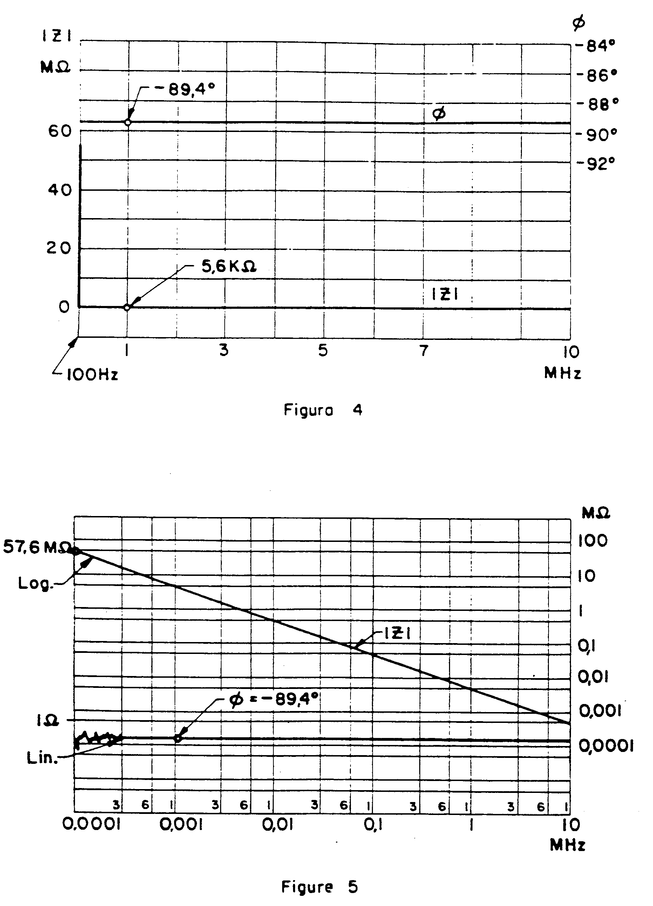

The tests conducted on the prototype probe have proven their suitability in the determiniation of high intensity acoustic fields. Fig. 4 shows the electrical response curves of the electro-acoustic transducer system. The graph shows a remarkably flat behaviour of the transducer system for a frequency range from 100 Hz to 10 Hz.

The response of the electronic preamplifier described above is likewise flat for the same frequency range. These features make it especially interesting for the device to be patented. Fig. 4 shows the electrical response curve.

The sensitivity of the developed prototype was determined. The value obtained was 2.3 x 10⁻³ mV/Pa, which, as compared to the sensitivity of the Lewin Probe (6), i.e. 2 x 10⁻⁴ mV/Pa, or to that of the current IMOTEC probe of 1 x 10⁻⁵ mV/Pa proves our invention to solve the basic problems outlined in this specification , adequate sensitivity together with sufficient solidity to measure very high intensity fields. The absence of resonances in the low frequency range, as shown in the response curve, is indicative of having achieved a significant decoupling between the piezoelectric element and the support tube. Please note that adaptation in preamplifier impedances has prevented the appearance of echos in the signal transmission line.

In the Description, reference has been made to the following publications:
1.- J.A. Gallego, L.F. Gaete, "Propagation of finite-amplitude ultrasonic waves in air." Journal of Acoustic Soc. of America 73 pp. 761-767 (1983)
2.- L.F. Gaete, J.A. Gallego, "Acoustic Saturation of standing waves in air." International Symposium on Nonlinear Acoustics, Leeds, UK (1981)
3.- Cf. "Condenser microphones and microphone amplifiers. Theory and application Handbook." Brüel § Kjaer, Naerum, Denmark (1977)
4.- V. Bañuls Terol, J.A., Gallego Juarez, L. Bjorno. "Acoustic Nonlinearity of Capillary Transmission Lines." Proc. 10th. ISNA 55-58 (1984)
5.- H. Schilling: "Final Report on Atmospheric Physics" Pennsylvania State College (1950.)
6.- P.A. Lewin, R.C. Chivers. "Two miniature ceramic ultrasonic probes." L. Phys. E. Sc. Instrument Vol. 14 pp 1420-1424 (1981)
7.- NP4 U.K. "Pvdf membrane hydrophones." DRSA AN 7 (1986)
8.- Hueter-Bolt. Johon Wiley § Son (1955)
9.- K.M. Sung "Piezoelectric multilayer transducers for Ultrasonic pulse compression." Ultrasonics March 1984 pp. 61-68.

## Claims

1. A probe for the measurements of high intensity acoustic fields, comprising an electroacoustic transducer system and an electronic signal conditioning system, the electroacoustic transducer system including a piezoelectric element (EP) and the electronic signal conditioning system including a preamplifier system (PAE),
wherein
- the probe is manufactured with piezoelectric materials having a thickness thin enough to prevent the resonance of the piezoelectric element (EP) in its first thickness mode to fall within the frequency range of the measurements;
- the piezoelectric element (EP) is encapsulated in a metal support tube (AM) whose diameter is considerably smaller than half the wavelength of the highest harmonic to be detected, and whose length is considerably longer than that of the wave of the basic component to be measured;
- the support tube (AM) is filled with a material possessing high dampening properties;
- the greatest lateral dimension of the piezoelectric element (EP) is considerably smaller than the inner dimension of the support tube (AM), thereby placing the piezoelectric element (EP) in a floating position;
- there is provided an earth conductor (CT) constituted by a very fine conductor wire;
- the housing (ASPE) of the preamplifier system (PAE) is made of metal and covered by a metal cap (TP) which allows a twin screened conductor wire to enter the probe;
- the preamplifier system (PAE) has a high power gain, a high input impedance, an ample frequency response and a low output impedance equivalent to that of the characteristic impedance of a screened twin cable for connecting the preamplifier system (PAE) to the measuring system;
- the metal support tube (AM) and the metal housing (ASPE) of the preamplifier system (PAE) act as an electromagnetic screen;
- and wherein the probe is equipped with an earthing system comprising one or more conductor wires (BCT, CT) fixed at different sites of an earth conductor support (SCT), the earth conductor support (SCT) being a cylinder sleeve equipped with an opening alongside its axis.

2. A probe according to claim 1, characterized in that the piezoelectric element (EP) is floating in a high loss elastic substance filled with particles from other materials.

3. A probe according to claim 1 or 2, characterized in that it is protected at its tip by a low attenuation material.

4. A probe according to any of the preceding claims, characterized in that impedance adaptation may be implemented through a single or multilayer system.

5. A probe according to any of the preceding claims, characterized in that the earth conductor support (SCT) may be manufactured either in a conductive or an insulating material.

6. A probe according to any of the preceding claims and characterized in that the metal support tube (AM) of the piezoelectric element (EP) slides through a frontal opening in the housing (ASPE) of the preamplifier system.

7. A probe according to any of the preceding claims, characterized in that the preamplifier housing (ASPE) is at the same time an electrical conductor.

8. A probe according to any of the preceding claims and characterized by the housing (ASPE) of the preamplifier system being equipped with a lock screw (TF).

9. A probe according to any of the preceding claims, characterized in that the wires connecting the piezoelectric element (EP) and the preamplifier system (PAE) are electrically screened by the metal support tube (AM) and the housing (ASPE) of the preamplifier system which arc electrically interconnected.

10. A probe according to any of the preceding claims and characterized in that the metal support tube (AM) and the housing (ASPE) of the preamplifier system are connected at a single point to a screened earth conductor, i.e. exactly at the junction with the preamplifier system.

## Patentansprüche

1. Sonde für die Messungen akustischer Felder hoher Intensität, die ein elektroakustisches Wandlersystem und ein elektronisches Signalverarbeitungssystem umfaßt, wobei das elektroakustische Wandlersystem ein piezoelektrisches Element (EP) enthält, und das elektronische Signalverarbeitungssystem ein Vorverstärkersystem (PAE) enthält, wobei:
- die Sonde mit piezoelektrischen Materialien mit einer Dicke hergestellt wird, die so dünn ist, daß verhindert wird, daß die Resonanz des piezoelektrischen Elementes (EP) in seinem ersten Dickenbetrieb in den Frequenzbereich der Messungen fällt;
- das piezoelektrische Element (EP) in einer Metallaufnahmeröhre (AM) eingeschlossen ist, deren Durchmesser erheblich geringer ist als die Hälfte der Wellenlänge der höchsten zu erfassenden harmonischen Komponente, und deren Länge erheblich größer ist als die der Welle der zu messenden Grundkomponente;
- die Aufnahmeröhre (AM) mit einem Material gefüllt ist, das starke Dämpfungseigenschaften besitzt;
- die größte seitliche Abmessung des piezoelektrischen Elementes (EP) erheblich geringer ist als die Innenabmessung der Aufnahmeröhre (AM), so daß das piezoelektrische Element (EP) in einem schwimmenden Zustand angeordnet ist;
- ein Erdleiter (CT) vorhanden ist, der durch einen sehr feinen Leiterdraht gebildet wird;
- das Gehäuse (ASPE) des Vorverstärkerssystems (PAE) aus Metall besteht und mit einer Metallkappe (TP) abgedeckt ist, die das Eintreten eines abgeschirmten Zwillingsleiterdrahtes in die Sonde ermöglicht;
- das Vorverstärkersystem (PAE) eine hohe Leistungsverstärkung, eine hohe Eingangsimpedanz, einen breiten Frequenzgang und eine niedrige Ausgangsimpedanz aufweist, die der charakteristischen Impedanz eines abgeschirmten Zwillingskabels zur Verbindung des Vorverstärkersystems (PAE) mit dem Meßsystem äquivalent ist;
- die Metallaufnahmeröhre (AM) und das Metallgehäuse (ASPE) des Vorverstärkersystem (PAE) als elektromagnetische Abschirmung wirken;
- und wobei die Sonde mit einem Erdungssystem ausgestattet ist, das einen oder mehrere Leiterdrähte (BCT, CT) umfaßt, die an unterschiedlichen Stellen einer Erdleiterhalterung (SCT) befestigt sind, wobei die Erdleiterhalterung (SCT) eine Zylinderhülse ist, die mit einer Öffnung entlang ihrer Achse versehen ist.

2. Sonde nach Anspruch 1, **dadurch gekennzeichnet,** daß das piezoelektrische Element (EP) in einer stark dämpfenden elastischen Substanz schwimmt, die mit Teilchen aus anderen Materialien gefüllt ist.

3. Sonde nach Anspruch 1 oder 2, **dadurch gekennzeichnet,** daß sie an ihrer Spitze durch ein schwach dämpfendes Material geschützt ist.

4. Sonde nach einem der vorangehenden Ansprüche, **dadurch gekennzeichnet,** daß die Impedanzanpassung über ein Ein- oder Mehrschichtsystem ausgeführt werden kann.

5. Sonde nach einem der vorangehenden Ansprüche**, dadurch gekennzeichnet,** daß die Erdleiterhalterung (SCT) entweder aus einem leitenden oder einem isolierenden Material hergestellt werden kann.

6. Sonde nach einem der vorangehenden Ansprüche, **dadurch gekennzeichnet,** daß die Metallaufnahmeröhre (AM) des Piezoelektrischen Elementes (EP) durch eine vordere Öffnung in dem Gehäuse (ASPE) des Vorverstärkersystems gleitet.

7. Sonde nach einem der vorangehenden Ansprüche, **dadurch gekennzeichnet,** daß das Vorverstärkergehäuse (ASPE) gleichzeitig ein elektrischer Leiter ist.

8. Sonde nach einem der vorangehenden Ansprüche, **dadurch gekennzeichnet,** daß das Gehäuse (ASPE) des Vorverstärkersystems mit einer Arretierschraube (TF) versehen ist.

9. Sonde nach einem der vorangehenden Ansprüche**, dadurch gekennzeichnet,** daß die Drähte, die das piezoelektrische Element (EP) und das Vorverstärkersystem (PAE) miteinander verbinden, durch die Metallaufnahmeröhre (AM) und das Gehäuse (ASPE) des Vorverstärkersystems, die elektrisch miteinander verbunden sind, elektrisch abgeschirmt sind.

10. Sonde nach einem der vorangehenden Ansprüche, **dadurch gekennzeichnet,** daß die Metallaufnahmeröhre (AM) und das Gehäuse (ASPE) des Vorverstärkersystems an einem einzelnen Punkt mit einem abgeschirmten Erdleiter verbunden sind, d.h., genau an der Verbindung mit dem Vorverstärkersystem.

## Revendications

1. Sonde pour des mesures de champs acoustiques haute intensité, comprenant un système de transducteur électro-acoustique et un système de conditionnement de signal électronique, le système de transducteur électro-acoustique incluant un élément piézo-électrique (EP) et le système de conditionnement de signal électronique incluant un système de pré-amplificateur (PAE),
dans lequel :
la sonde est fabriquée à l'aide de matériaux piézo-électriques présentant une épaisseur suffisamment mince pour empêcher que la résonance de l'élément piézo-électrique (EP) dans son premier mode d'épaisseur ne tombe dans la plage de fréquences des mesures ;
l'élément piézo-électrique (EP) est encapsulé dans un tube de support en métal (AM) dont le diamètre est considérablement inférieur à la moitié de la longueur de l'harmonique le plus élevé à détecter et dont la longueur est considérablement plus importante que celle de l'onde de la composante de base à mesurer ;
le tube de support (AM) est rempli d'un matériau qui possède des propriétés d'amortissement élevées ;
la dimension latérale la plus importante de l'élément piézo-électrique (EP) est considérablement inférieure à la dimension interne du tube de support (AM), ce qui place l'élément piézo-électrique (EP) dans une position flottante ;
est prévu un conducteur de mise à la masse (CT) constitué par un fil conducteur très fin ;
le boîtier (ASPE) du système de pré-amplificateur (PAE) est réalisé en un métal et est recouvert d'un capuchon en métal (TP) qui permet à un fil conducteur double de pénétrer dans la sonde ;
le système de pré-amplificateur (PAE) présente un gain de puissance élevé, une impédance d'entrée élevée, une réponse de fréquence ample et une impédance de sortie faible équivalente à l'impédance caractéristique d'un câble à double blindage pour connecter le système de pré-amplificateur (PAE) au système de mesure ;
le tube de support en métal (AM) et le boîtier en métal (ASPE) du système de pré-amplificateur (PAE) jouent le rôle d'écran électromagnétique ; et
dans lequel la sonde est munie d'un système de mise à la masse comprenant un ou plusieurs fils conducteurs (BCT, CT) fixés au niveau de différents sites d'un support de conducteur de mise à la masse (SCT), le support de conducteur de mise à la masse (SCT) étant une gaine cylindrique munie d'une ouverture le long de son axe.

2. Sonde selon la revendication 1, caractérisée en ce que l'élément piézo-électrique (EP) est flottant dans une substance élastique à perte élevée remplie de particules provenant d'autres matériaux.

3. Sonde selon la revendication 1 ou 2, caractérisée en ce qu'elle est protégée au niveau de son extrémité par un matériau à faible atténuation.

4. Sonde selon l'une quelconque des revendications précédentes, caractérisée en ce qu'une adaptation d'impédance peut être mise en oeuvre par l'intermédiaire d'un système monocouche ou multicouche.

5. Sonde selon l'une quelconque des revendications précédentes, caractérisée en ce que le support de conducteur de mise à la masse (SCT) peut être fabriqué soit en un matériau conducteur soit en un matériau isolant.

6. Sonde selon l'une quelconque des revendications précédentes, caractérisée en ce que le tube de support en métal (AM) de l'élément piézo-électrique (EP) coulisse au travers d'une ouverture frontale ménagée dans le boîtier (ASPE) du système de pré-amplificateur.

7. Sonde selon l'une quelconque des revendications précédentes, caractérisée en ce que le pré-amplificateur (ASPE) est en même temps un conducteur électrique.

8. Sonde selon l'une quelconque des revendications précédentes, caractérisée en ce que le boîtier (ASPE) du système de pré-amplificateur est muni d'une vis de blocage (TF).

9. Sonde selon l'une quelconque des revendications précédentes, caractérisée en ce que les fils connectant l'élément piézo-électrique (EP) et le système de pré-amplificateur (PAE) sont protégés électriquement par le tube de support en métal (AM) et par le boîtier (ASPE) du système de pré-amplificateur qui sont interconnectés électriquement.

10. Sonde selon l'une quelconque des revendications précédentes, caractérisée en ce que le tube de support en métal (AM) et le boîtier (ASPE) du système de pré-amplificateur sont connectés au niveau d'un unique point à un conducteur de mise à la masse protégé, c'est-à-dire à la jonction avec le système de pré-amplificateur.
